# FASCICULE DE BREVET EUROPEEN

(11) **EP 0 989 647 B1**
(45) Date de publication et mention de la délivrance du brevet: **06.12.2006**
(21) Numéro de dépôt: 99402291.1
(22) Date de dépôt: 20.09.1999
(51) Int. Cl.: H02B 1/015

(54) **Châssis, notamment pour appareillage électrique**
Rahmengestell, insbesondere für ein Elektrogerät
Frame, in particular for electrical appliance

(30) Priorité: 22.09.1998 FR 9811807
(43) Date de publication de la demande: 29.03.2000
(73) Titulaire: LEGRAND, 87000 Limoges (FR); LEGRAND SNC, 87045 Limoges (FR)
(72) Inventeur: Combas, Christian, 87240 Ambazac (FR); Coste, Gilles, 87350 Panazol (FR)
(74) Mandataire: Santarelli

(56) Documents cités:
- EP-A- 0 760 546
- CH-A- 285 914
- DE-U- 9 416 322

## Description

La présente invention concerne d'une manière générale les châssis du type de ceux mis en oeuvre par exemple pour le support d'un quelconque appareillage, et, plus précisément, d'un quelconque appareillage électrique.

Ces châssis interviennent le plus souvent au sein de quelconques enveloppes, telles que coffrets ou armoires, en étant disposés parallèlement au fond d'une telle enveloppe.

La présente invention vise plus particulièrement ceux de ces châssis qui comportent, très simplement, deux longerons, qui, parallèles l'un à l'autre, sont reliés l'un à l'autre par au moins une traverse, chacun de ces longerons comportant, sur sa paroi de façade, au moins une zone de fixation par laquelle il est apte à la fixation d'une telle traverse.

En pratique, plusieurs traverses sont échelonnées parallèlement les unes aux autres le long de ces longerons.

Il peut s'agir de barreaux de section transversale quelconque, mais, le plus souvent, il s'agit de rails à profil normalisé, et, par exemple, de rails à profil en chapeau.

Cela est le cas, notamment, lorsque l'appareillage électrique à mettre en place, ou, plus précisément, les appareils électriques constituant cet appareillage, sont modulaires.

L'un des problèmes à surmonter, dans un tel cas, tient, d'une part, à ce que, pour interdire, pour des raisons de sécurité, l'accès aux parties actives de ces appareils électriques, l'enveloppe correspondante est usuellement équipée, à l'avant du châssis, et parallèlement à celui-ci, d'un plastron dont n'émerge qu'une partie restreinte de ces appareils électriques, et, d'autre part, à ce que doivent parfois coexister, au sein d'une même enveloppe, des appareils électriques de hauteurs différentes.

Cela est le cas, notamment, lorsque doivent ainsi coexister, au sein d'une même enveloppe, des disjoncteurs de puissance, de hauteur nécessairement relativement importante, et des disjoncteurs divisionnaires, de hauteur plus réduite.

Pour que tous ces appareils électriques affleurent convenablement au niveau du plastron, il importe de pouvoir disposer, sur le châssis, de traverses implantées à deux niveaux de profondeur différents par rapport à ce plastron.

Diverses dispositions ont déjà été proposées dans ce but.

Selon une première de ces dispositions, qui est le plus souvent mise en oeuvre lorsque l'enveloppe concernée est à disposer en saillie sur un quelconque support, il est interposé, entre les longerons du châssis et l'une au moins des traverses de celui-ci, une ou plusieurs entretoises permettant de rapprocher cette traverse du plastron.

Mais cela implique de mettre en oeuvre des pièces supplémentaires, en l'espèce les entretoises, au prix d'une complication des fabrications et du montage, et, donc, au détriment des coûts.

Suivant une deuxième disposition déjà connue, qui est le plus souvent mise en oeuvre lorsque l'enveloppe concernée est à encastrer dans son support, les longerons du châssis s'étendent en porte à faux à compter de la façade de l'ensemble, en étant en quelque sorte suspendus à celle-ci, et certaines des traverses sont rapportées comme précédemment sur la face avant de ces longerons tandis que l'une au moins d'entre elles est au contraire rapportée sur leur face arrière.

Mais, dans le cas d'une modification de l'installation, c'est-à-dire dans le cas où une nouvelle traverse doit être mise en place sur la face arrière des longerons, il est alors nécessaire de procéder à un démontage général de l'ensemble, pour avoir effectivement accès à cette face arrière des longerons, au prix d'une complication de l'opération correspondante, et donc, comme précédemment, au détriment des coûts.

Suivant une troisième disposition connue, l'un au moins des longerons comporte, en retrait par rapport à sa paroi de façade, au moins une languette, qui fait saillie en direction de l'autre longeron, et qui, présentant elle aussi au moins une zone de fixation, est elle aussi propre à recevoir une traverse, ce qui permet effectivement d'implanter une telle traverse à un niveau différent de celui correspondant à la paroi de façade de ces longerons.

Mais cette traverse devant nécessairement s'insérer entre les longerons au lieu d'être rapportée sur ceux-ci, il est nécessaire de la couper, pour adapter sa longueur à la distance séparant l'un de l'autre ces longerons, et, comme précédemment, il en résulte une certaine complication de l'opération correspondante, au détriment des coûts. Le document EP-A1-0760 546 décrit un châssis du genre mentionné ci-dessus.

La présente invention a d'une manière générale pour objet une disposition permettant d'éviter ces inconvénients.

De manière plus précise, elle a pour objet un châssis, notamment pour appareillage électrique, du genre comportant deux longerons reliés l'un à l'autre par au moins une traverse, chacun de ces longerons présentant, sur sa paroi de façade, au moins une zone de fixation par laquelle il est apte à la fixation d'une telle traverse, et l'un au moins d'entre eux comportant, en retrait par rapport à cette paroi de façade, au moins une languette, qui fait saillie en direction de l'autre longeron, et qui présente elle-même au moins une zone de fixation, caractérisé en ce que, au droit de cette languette, le longeron concerné comporte, sur sa paroi de flanc, une ouverture propre au passage d'une traverse.

Grâce à une telle disposition, une traverse peut être mise en place à niveau avec cette languette sans avoir à être coupée au préalable.

Il suffit, en effet, de l'engager dans l'ouverture correspondante, en absorbant ainsi très simplement sa longueur en surplus.

L'opération de mise en place de cette traverse se trouve ainsi avantageusement simplifiée.

Les caractéristiques et avantages de l'invention ressortiront d'ailleurs de la description qui va suivre, à titre d'exemple, en référence aux dessins schématiques annexés sur lesquels :

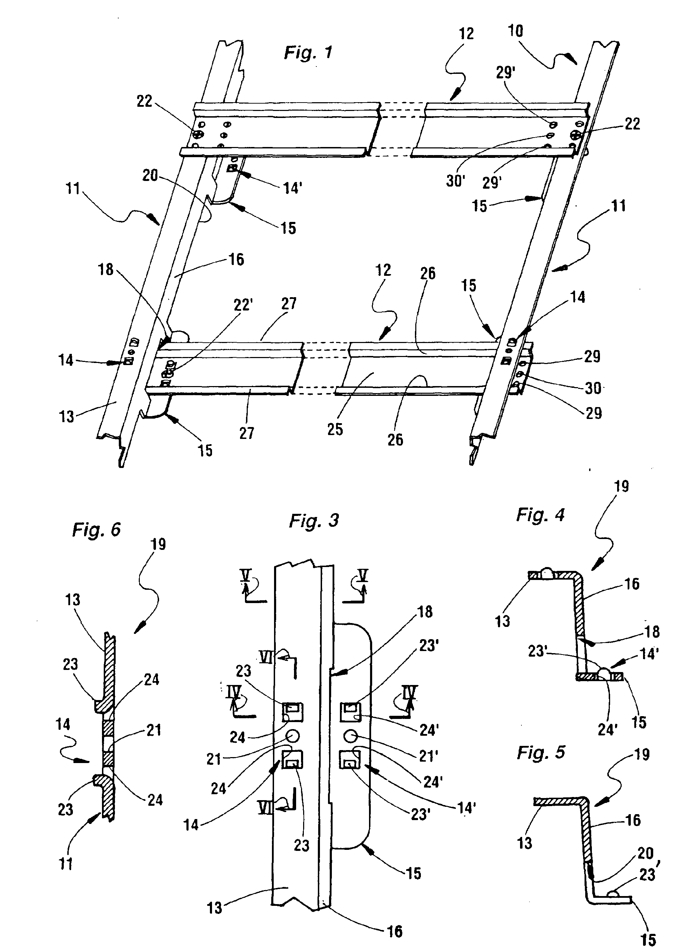

la figure 1 est une vue partielle en perspective d'un châssis suivant l'invention ;
la figure 2 en est, à échelle supérieure, une vue partielle en perspective éclatée ;
la figure 3 est, à échelle différente, une vue partielle en élévation d'un des longerons que comporte ce châssis, suivant la flèche III de la figure 2 ;
les figures 4 et 5 sont des vues en coupe transversale de ce longeron, suivant chacune respectivement les lignes IV-IV et V-V de la figure 3 ;
la figure 6 en est, à échelle légèrement supérieure, une vue partielle en coupe longitudinale, suivant la ligne VI-VI de la figure 3 ;

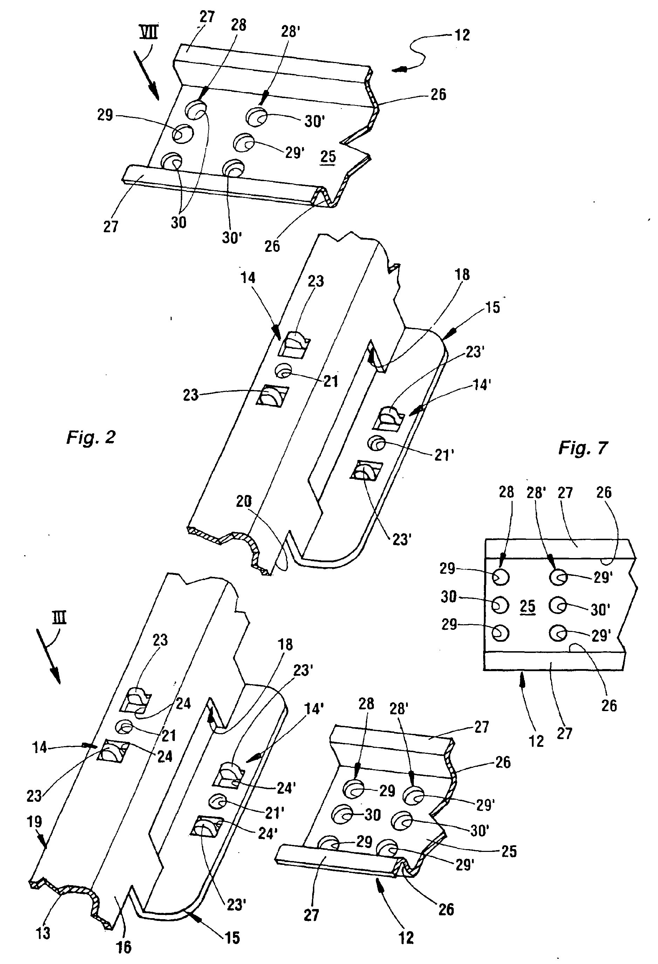

la figure 7 est, à échelle différente, une vue partielle en élévation d'une des traverses que comporte également le châssis suivant l'invention, suivant la flèche VII de la figure 2.

Tel qu'illustré sur ces figures, et de manière connue en soi, le châssis 10 suivant l'invention comporte, globalement, deux longerons 11 reliés l'un à l'autre par au moins une traverse 12, chacun des ces longerons 11 présentant, sur sa paroi de façade 13, au moins une zone de fixation 14 par laquelle il est apte à la fixation d'une telle traverse 12.

En pratique, les deux longerons 11 s'étendent parallèlement l'un à l'autre, et, suivant des dispositions décrites plus en détail ultérieurement, le châssis 10 comporte plusieurs traverses 12 échelonnées de place en place suivant leur longueur, à la manière des barreaux d'une échelle.

De manière connue en soi, également, l'un au moins des longerons 11, et, en pratique, chacun d'entre eux, comporte, en retrait par rapport à sa paroi de façade 13, c'est-à-dire de manière décalée en profondeur par rapport à celle-ci, au moins une languette 15, qui fait saillie en direction de l'autre longeron 11, et qui présente elle-même au moins une zone de fixation 14' par laquelle elle est apte à la fixation d'une traverse 12.

Suivant l'invention, le longeron 11 concerné par une telle languette 15, et, donc, il en est ainsi pour chacun des longerons 11 dans la forme de réalisation représentée, comporte, au droit de cette languette 15, sur sa paroi de flanc 16 tournée vers l'autre longeron 11, une ouverture 18 propre au passage d'une traverse 12.

Dans la forme de réalisation représentée, les deux longerons 11 sont identiques l'un à l'autre.

Mais ils sont mis en oeuvre suivant une symétrie de type miroir, par retournement de 180° de l'un par rapport à l'autre.

Dans la forme de réalisation représentée, les longerons 11 se réduisent, pour l'essentiel, c'est-à-dire abstraction faite des languettes 15, à leur paroi de façade 13 et à leur paroi de flanc 16, et celles-ci sont sensiblement perpendiculaires l'une à l'autre, à la manière d'une cornière, tout en faisant un angle légèrement supérieur à 90° entre elles.

Préférentiellement, et cela est le cas dans la forme de réalisation représentée, il y a plusieurs languettes 15 échelonnées de place en place le long de chacun des longerons 11, suivant, par exemple, un pas régulier, et chacune d'elles ne présente qu'une seule zone de fixation 14'.

En pratique, ces languettes 15 sont toutes à un même niveau par rapport à la paroi de façade 13 du longeron 11, et elles sont chacune respectivement établies au droit des zones de fixation 14 que présente cette paroi de façade 13.

Plus précisément, la zone de fixation 14' que présente elle-même chacune des languettes 15 est établie exactement au droit de la zone de fixation 14 correspondante de la paroi de façade 13.

En pratique, chacune des languettes 15 des longerons 11 est sensiblement parallèle à leur paroi de façade 13.

Mais, compte tenu de ce qui précède, une telle languette 15 et la paroi de façade 13 s'étendent dans des directions opposées l'une par rapport à l'autre par rapport à la paroi de flanc 16.

Préférentiellement, et cela est le cas dans la forme de réalisation représentée, l'ouverture 18 que présente la paroi de flanc 16 des longerons 11 au droit d'une languette 15 est au ras de cette languette 15.

Par exemple, et tel que représenté, cette ouverture 18 a un contour rectangulaire.

En pratique, également, chacune des languettes 15 résulte d'un simple repliement, sensiblement à l'équerre, d'un prolongement local de la paroi de flanc 16 des longerons 11.

Mais, dans la forme de réalisation représentée, cette paroi de flanc 16 présente, d'une languette 15 à une autre, une large échancrure 20, qui en réduit localement la hauteur.

Par exemple, l'échancrure 20 a elle-même un contour globalement rectangulaire.

Préférentiellement, et cela est le cas dans la forme de réalisation représentée, les zones de fixation 14, 14' des longerons 11 sont de même nature.

Plus précisément, ces zones de fixation 14, 14' reprennent l'une et l'autre des dispositions identiques.

Par exemple, et tel que représenté, ces zones de fixation 14, 14' présentent, chacune, en correspondance l'une avec l'autre, au moins un perçage 21, 21', qui est propre au passage d'un quelconque moyen de fixation 22, 22', une vis ou un boulon par exemple, pour la fixation d'une traverse 12, et dont le contour est par exemple circulaire.

Dans la forme de réalisation représentée, un seul perçage 21, 21' est prévu.

Dans la forme de réalisation représentée, les zones de fixation 14, 14' des longerons 11 comportent, en outre, chacune, en correspondance l'une avec l'autre, au moins un ergot 23, 23', qui fait saillie sensiblement perpendiculairement à la paroi de façade 13.

Préférentiellement, et cela est le cas dans la forme de réalisation représentée, les zones de fixation 14, 14' comportent, chacune, en correspondance l'une avec l'autre, deux ergots 23, 23', qui, alignées suivant une direction parallèle à la direction d'allongement des longerons 11, sont chacun respectivement disposés de part et d'autre du perçage 21, 21' correspondant, à distance de celui-ci.

Dans la forme de réalisation représentée, les ergots 23, 23' sont chacun venus d'un seul tenant des longerons 11, à la faveur de crevés 24, 24' de ceux-ci.

Dans la forme de réalisation représentée, les traverses 12 sont des rails de profil normalisé.

Plus précisément, il s'agit de rails à profil en chapeau.

Elles comportent donc, chacune, une partie médiane 25 et deux ailes latérales 26, avec, à un même niveau, le long du bord libre de ces ailes latérales 26, des retours en équerre 27 dirigés en directions opposées l'un par rapport à l'autre.

Suivant l'invention, ces traverses 12 ont toutes la même longueur.

Elles présentent, en outre, toutes, sur leur partie médiane 25, au voisinage des extrémités de celle-ci, deux rangées 28, 28' de trous 29, 29' 30, 30' qui, à distance l'une de l'autre, comportent chacune trois trous 29, 29', 30, 30' alignés transversalement, à savoir un trou médian 29, 29' pour le passage d'un moyen de fixation 22, 22' et deux trous d'extrémité 30, 30' pour un engagement sur des ergots 23, 23'.

Au montage, et suivant les nécessités de l'installation à réaliser, des traverses 12 peuvent être rapportées sur les longerons 11 en étant indifféremment disposées de la paroi de façade 13 de l'un à la paroi de façade 13 de l'autre ou d'une des languettes 15 de l'un à la languette 15 correspondante de l'autre, et en étant ensuite assujetties à ces longerons 11 par un moyen de fixation 22, 22' à chacune de leurs extrémités.

Lorsqu'elles sont rapportées sur la paroi de façade 13, elles sont simplement engagées de l'avant sur celle-ci.

Lorsqu'elles sont rapportées de l'une à l'autre de deux languettes 15, il faut au préalable les engager d'abord de biais dans l'ouverture 18 associée à l'une de ces languettes 15, puis, après les avoir redressées, les engager tout droit dans l'ouverture 18 associée à l'autre de celles-ci.

Bien entendu la hauteur des ouvertures 18 associées aux languettes 15 doit être suffisante pour permettre alors un débattement initial des traverses 12 par rapport aux ergots 23' correspondants.

Dans tous les cas, et ainsi qu'il est aisé de le comprendre, les ergots 23, 23' facilitent avantageusement la mise en place de ces traverses 12, en assurant leur centrage par rapport aux perçages 21, 21' correspondants, et ils contribuent ensuite avantageusement à leur maintien.

## Revendications

1. Châssis, notamment pour appareillage électrique, du genre comportant deux longerons (11) reliés l'un à l'autre par au moins une traverse (12), chacun de ces longerons (11) présentant, sur sa paroi de façade (13), au moins une zone de fixation (14) par laquelle il est apte à la fixation d'une telle traverse (12), et l'un au moins d'entre eux comportant, en retrait par rapport à cette paroi de façade (13), au moins une languette (15), qui fait saillie en direction de l'autre longeron (11), et qui présente elle-même au moins une zone de fixation (14'), **caractérisé en ce que**, au droit de cette languette (15), le longeron (11) concerné comporte, sur sa paroi de flanc (16), une ouverture (18) propre au passage d'une traverse (12).

2. Châssis suivant la revendication 1, **caractérisé en ce que** la languette (15) est sensiblement parallèle à la paroi de façade (13).

3. Châssis suivant l'une quelconque des revendications 1, 2, **caractérisé en ce que** la languette (15) et la paroi de façade (13) s'étendent dans des directions opposées l'une par rapport à l'autre.

4. Châssis suivant l'une quelconque des revendications 1 à 3, **caractérisé en ce que** l'ouverture (18) que présente la paroi de flanc (16) au droit de la languette (15) est au ras de cette languette (15).

5. Châssis suivant l'une quelconque des revendications 1 à 4, **caractérisé en ce que** les zones de fixation (14, 14') sont de même nature.

6. Châssis suivant la revendication 5, **caractérisé en ce que** les zones de fixation (14, 14') présentent, chacune, en correspondance l'une avec l'autre, au moins un perçage (21, 21') propre au passage d'un quelconque moyen de fixation (22, 22').

7. Châssis suivant l'une quelconque des revendications 1 à 6, **caractérisé en ce que** les zones de fixation (14, 14') comportent, chacune, en correspondance l'une avec l'autre, au moins un ergot (23, 23'), qui fait saillie sensiblement perpendiculairement à la paroi de façade (13).

8. Châssis suivant les revendications 6 et 7, prises conjointement, **caractérisé en ce que** les zones de fixation (14, 14') comportent, chacune, en correspondance l'une avec l'autre, deux ergots (23, 23'), qui, alignés suivant une direction parallèle à la direction d'allongement des longerons (11), sont chacun respectivement disposés de part et d'autre du perçage (21, 21') correspondant, à distance de celui-ci.

9. Châssis suivant l'une quelconque des revendications 1 à 6, **caractérisé en ce que** il y a plusieurs languettes (15) échelonnées de place en place le long de chacun des longerons (11).

10. Châssis suivant la revendication 9, **caractérisé en ce que** les languettes (15) sont chacune respectivement établies au droit des zones de fixation (14) que présente la paroi de façade (13) des longerons (11).

11. Châssis suivant l'une quelconque des revendications 1 à 10, **caractérisé en ce que** les deux longerons (11) sont identiques l'un à l'autre.

## Claims

1. A chassis, in particular for an item of electrical equipment, of the kind comprising two longitudinal members (11) connected together by at least one transverse member (12), each of those longitudinal members (11) having on its front wall (13) at least one fixing zone (14) by way of which it is suitable for the fixing of such a transverse member (12) and one at least thereof comprising in set-back relationship with respect to said front wall (13) at least one tongue portion (15) which projects in the direction of the other longitudinal member (11) and which itself has at least one fixing zone (14'), **characterised in that** in line with said tongue portion (15) the longitudinal member (11) in question comprises on its side wall (16) an opening (18) for a transverse member (12) to pass therethrough.

2. A chassis according to claim 1 **characterised in that** the tongue portion (15) is substantially parallel to the front wall (13).

3. A chassis according to either one of claims 1 and 2 **characterised in that** the tongue portion (15) and the front wall (13) extend in mutually opposite directions.

4. A chassis according to any one of claims 1 to 3 **characterised in that** the opening (18) in the side wall (16) in line with the tongue portion (15) is level with said tongue portion (15).

5. A chassis according to any one of claims 1 to 4 **characterised in that** the fixing zones (14, 14') are of the same nature.

6. A chassis according to claim 5 **characterised in that** the fixing zones (14, 14') each have in mutually corresponding relationship at least one aperture (21, 21') for any fixing means (22, 22') to pass therethrough.

7. A chassis according to any one of claims 1 to 6 **characterised in that** the fixing zones (14, 14') each comprise in mutually corresponding relationship at least one lug (23, 23') which projects substantially perpendicularly from the front wall (13).

8. A chassis according to claims 6 and 7 in combination **characterised in that** the fixing zones (14, 14') each comprise in mutually corresponding relationship two lugs (23, 23') which, aligned in a direction parallel to the direction of elongation of the longitudinal members (11), are each disposed on respective sides of the corresponding aperture (21, 21') at a spacing therefrom.

9. A chassis according to any one of claims 1 to 6 **characterised in that** there are a plurality of tongue portions (15) in spaced relationship along each of the longitudinal members (11).

10. A chassis according to claim 9 **characterised in that** the tongue portions (15) are each respectively disposed in line with the fixing zones (14) on the front wall (13) of the longitudinal members (11).

11. A chassis according to any one of claims 1 to 10 **characterised in that** the two longitudinal members (11) are identical to each other.

## Patentansprüche

1. Rahmengestell, insbesondere für Elektrogeräte, der Art mit zwei Längsträgern (11), die miteinander durch wenigstens einen Querträger (12) verbunden sind, wobei jeder der Längsträger (11) auf seiner Stirnwand (13) wenigstens einen Befestigungsbereich (14) aufweist, durch den er einen derartigen Querträger (12) zu befestigen vermag, und von denen wenigstens einer von ihnen bezüglich der Stirnwand (13) nach hinten versetzt wenigstens eine Zunge (15) aufweist, die in Richtung des anderen Längsträgers (11) vorsteht und die ihrerseits wenigstens einen Befestigungsbereich (14') aufweist,
**dadurch gekennzeichnet, dass** der betreffende Längsträger (11) auf seiner Seitenwand (16) rechtwinklig zu der Zunge (15) eine Öffnung (18) aufweist, die zum Hindurchführen eines Längsträgers (12) geeignet ist.

2. Rahmengestell nach Anspruch 1,
**dadurch gekennzeichnet, dass** die Zunge (15) im Wesentlichen parallel zu der Stirnwand (13) ist.

3. Rahmengestell nach einem der Ansprüche 1, 2,
**dadurch gekennzeichnet, dass** die Zunge (15) und die Stirnwand (13) bezüglich einander in entgegensetzte Richtungen verlaufen.

4. Rahmengestell nach einem der Ansprüche 1 bis 3,
**dadurch gekennzeichnet, dass** die Öffnung (18), die die Seitenwand (16) rechtwinklig zu der Zunge (15) aufweist, auf gleicher Höhe mit der Zunge (15) ist.

5. Rahmengestell nach einem der Ansprüche 1 bis 4,
**dadurch gekennzeichnet, dass** die Befestigungsbereiche (14, 14') gleichartig sind.

6. Rahmengestell nach Anspruch 5,
**dadurch gekennzeichnet, dass** jeder der Befestigungsbereiche (14, 14') in Übereinstimmung miteinander wenigstens eine Bohrung (21, 21) aufweist, die zum Hindurchführen eines beliebigen Befestigungsmittels (22, 22') geeignet ist.

7. Rahmengestell nach einem der Ansprüche 1 bis 6,
**dadurch gekennzeichnet, dass** die Befestigungsbereiche (14, 14') jeweils miteinander übereinstimmend wenigstens einen Vorsprung (23, 23') aufweisen, der im Wesentlichen senkrecht zur Stirnwand (13) vorsteht.

8. Rahmengestell nach den Ansprüchen 6 und 7 in Kombination,
**dadurch gekennzeichnet, dass** jeder der Befestigungsbereiche (14, 14') miteinander übereinstimmend zwei Vorsprünge (23, 23') aufweist, die jeweils parallel zur Ausdehnungsrichtung der Längsträger (11) fluchtend angeordnet beiderseits der entsprechenden Bohrung (21, 21') mit Abstand zu dieser angeordnet sind.

9. Rahmengestell nach einem der Ansprüche 1 bis 6,
**dadurch gekennzeichnet, dass** mehrere Zungen (15) vorhanden sind, die entlang eines jeden Längsträgers (11) hier und dort verteilt sind.

10. Rahmengestell nach Anspruch 9,
**dadurch gekennzeichnet, dass** jede der Zungen (15) jeweils rechtwinklig zu den Befestigungsbereichen (14) angebracht ist, die die Stirnwand (13) der Längsträger (11) aufweist.

11. Rahmengestell nach einem der Ansprüche 1 bis 10,
**dadurch gekennzeichnet, dass** die beiden Längsträger (11) miteinander identisch sind.
